(19)

Europäisches
Patentamt
European
Patent Office
Office européen
des brevets

(11)     **EP 4 430 446 B1**

(12)                    **EUROPEAN PATENT SPECIFICATION**

(45) Date of publication and mention
of the grant of the patent:
**27.08.2025   Bulletin 2025/35**

(21) Application number: **22823184.1**

(22) Date of filing: **04.11.2022**

(51) International Patent Classification (IPC):
*G02B 27/01* *(2006.01)*

(52) Cooperative Patent Classification (CPC):
**G02B 27/0172; G02B 27/0081;** G02B 2027/0138;
G02B 2027/014; G02B 2027/0178

(86) International application number:
**PCT/US2022/048914**

(87) International publication number:
**WO 2023/086269 (19.05.2023 Gazette 2023/20)**

(54) **CURVED THIN SEE-THROUGH LIGHTGUIDE WITH LARGE EYEBOX**

GEBOGENER DÜNNER DURCHSICHTIGER LICHTLEITER MIT GROSSER EYEBOX

GUIDE DE LUMIÈRE TRANSPARENT FIN INCURVÉ AVEC LARGE BOÎTIER OCULAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **09.11.2021   US 202163277350 P**

(43) Date of publication of application:
**18.09.2024   Bulletin 2024/38**

(73) Proprietor: **Google LLC
Mountain View, CA 94043 (US)**

(72) Inventor: **CAKMAKCI, Ozan
Mountain View, California 94043 (US)**

(74) Representative: **Maikowski & Ninnemann
Patentanwälte Partnerschaft mbB
Postfach 15 09 20
10671 Berlin (DE)**

(56) References cited:
**US-A1- 2003 086 135      US-A1- 2016 357 016
US-A1- 2017 010 465      US-A1- 2017 363 870
US-A1- 2019 293 869      US-A1- 2021 341 739**

• **XU MIAOMIAO ET AL: "Effects of image focal
depth in geometrical lightguide head mounted
displays", SPIE PROCEEDINGS;
[PROCEEDINGS OF SPIE ISSN 0277-786X], SPIE,
US, vol. 11310, 19 February 2020 (2020-02-19),
pages 113100N - 113100N, XP060129728, ISBN:
978-1-5106-3673-6, DOI: 10.1117/12.2543264**

**Description**

BACKGROUND

Wearable electronic eyewear devices, such as disclosed in US 2003/086135 A1, include optical systems that magnify a display image and deliver a virtual image into the field of view (FOV) of a user. In some cases, wearable electronic eyewear devices also allow the user to see the outside world through a lens or see-through eyepiece. Some wearable electronic eyewear devices incorporate a near-to-eye optical system to display content to the user. These devices are sometimes referred to as eyewear displays. For example, conventional eyewear display designs include a microdisplay ("display") positioned in a temple or rim region of a head wearable frame like a conventional pair of eyeglasses. The display generates images, such as computer-generated images (CGI), that are conveyed into the FOV of the user by optical elements such as curved lightguides deployed in the lens of the head wearable display frame. The wearable electronic eyewear display device can therefore serve as a hardware platform for implementing augmented reality (AR) or mixed reality (MR). Different modes of augmented reality include optical see-through augmented reality, video see-through augmented reality, or opaque (VR) modes.

Light transmitted from a microdisplay to a user's eye in an eyewear display device generally undergoes multiple reflections, refractions, diffractions, and/or changes in polarization that can result in stray light within the system. Stray light within an eyewear display device reduces image contrast and can create haziness and ghost images in the field of view. Minimizing stray light in eyewear display devices provides a user with a more enjoyable viewing experience while also reducing eye fatigue.

US 2003/086135 A1 discloses an image display device to be used in a wearable electronic eyewear device, said display device comprising a microdisplay, a curved lightguide, an incoupler for directing light from the microdisplay into the lightguide and an outcoupler for directing a portion of the light out of the lightguide toward a user's eye, said outcoupler being arranged to receive a single interaction of the light at the side of the outcoupler facing the user's eye.

SUMMARY

The present disclosure describes embodiments of an eyewear display having an expanded eyebox and techniques for mitigating artifacts. The proposed solution relates to an eyewear display device of claim 1 and a method of claim 8.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a display system including an incoupler and outcoupler configured to produce an enlarged eyebox in accordance with some embodiments.

FIG. 2 is a diagram illustrating a curved lightguide including an incoupler thicker than the curved lightguide and an outcoupler angled to receive two bounces of display light in accordance with some embodiments.

FIG. 3 is a diagram illustrating a display system carried by an eyeglasses frame in accordance with some embodiments.

FIG. 4 is a diagram illustrating an eyebox in relation to a lens of a display system in accordance with some embodiments.

FIG. 5 is a diagram illustrating side images that can be visible due to interactions of display light with an outcoupler of a curved lightguide in accordance with some embodiments.

FIG. 6 is a diagram illustrating placement of a low-index coating to reflect main image light and a gap in the low-index coating to allow side image light to escape a curved lightguide to be absorbed by a sunglass coating on a lens of a display system in accordance with some embodiments.

FIG. 7 is a diagram illustrating a display system with a gap in a low-index coating to mitigate artifacts in accordance with some embodiments.

FIG. 8 is a diagram illustrating a difference in a number of bounces of main image light and side image light at a world-side of a curved lightguide in accordance with some embodiments.

FIG. 9 is a diagram illustrating polarization splitting by a dielectric mirror coating in accordance with some embodiments.

FIG. 10 is a diagram illustrating dimming of side images from a half-wave plate and a dielectric mirror coating in accordance with some embodiments.

DETAILED DESCRIPTION

The population of potential eyewear display users exhibits a large range of facial geometries characterized by a distribution of nose geometries, a distribution of distances from ear apex to ear apex, and a distribution of interpupillary distances (i.e., a distance between centers of the user's pupils). A single eyewear display device design is not likely to provide an optimal experience for all users while meeting all the physical and geometric constraints of a wearable device. For example, a user only sees the entirety of the image displayed by the eyewear display device if the user's pupils fall within an "eyebox" produced by the optical system implemented in the device. However, a conventional eyewear display device produces a relatively small eyebox that does not encompass pupil locations throughout the entire distribution of facial geometries. Consequently, not all users are able to view the image displayed by the eyewear display.

The term "eyebox" refers to a three-dimensional (3D) volume in space within which the pupil of an eye is positioned in order to satisfy one or more viewing experience criteria. One example of a viewing experience criterion is that the user sees four edges of a magnified virtual image. In that case, the eyebox is the 3D volume in space within which the user's pupil is positioned to see the four edges of the magnified virtual image. In some embodiments, the volume of the eyebox produced by an electronic eyewear device is evaluated based on pupil diameter, an angular extent of an emission cone produced by the electronic eyewear device, a set of criteria, and thresholds for the criteria. Thus, increasing the pupil diameter increases the eyebox of an eyewear display, meaning the eyewear display can be used by a larger population of potential users with differing facial sizes and geometries.

Current flat waveguide architectures have optics, manufacturing, thickness, and prescription lens constraints. For example, optics are limited by battery life, image quality challenges such as resolution and color uniformity, and cost. In addition, optics are constrained by light leakage, lens back reflections, diffractive artifacts, and visible structures from within the lenses. Previous curved lightguide designs targeted optics efficiency of approximately 10%, implying an optical combiner tilt angle designed such that all light rays undergo total internal reflection (TIR). However, a tilt angle that results in TIR for all light rays geometrically limits the eyebox to the lightguide thickness. As light sources achieve higher luminance (on the order of one million nits), the percentage of light rays for which TIR is targeted can be relaxed.

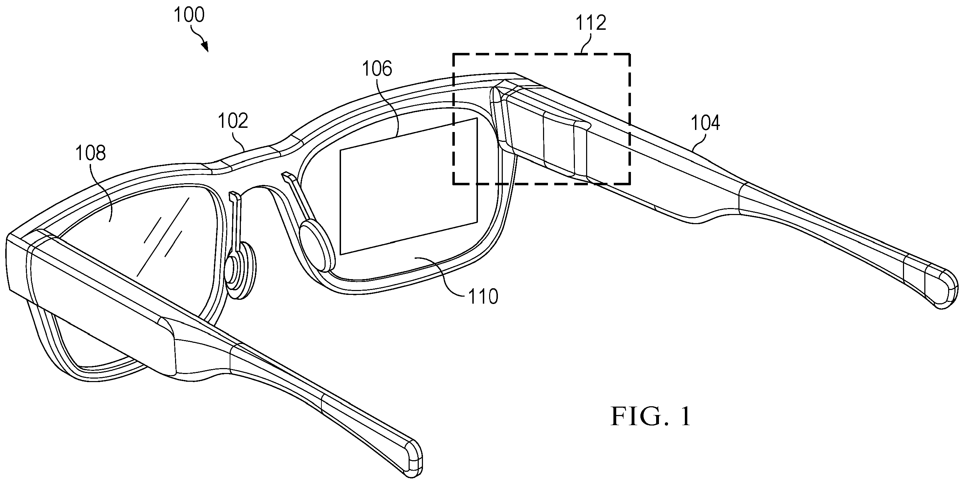

FIGS. 1-10 illustrate thin, curved lightguides that employ at least one incoupler that is thicker than the curved lightguide as well as an outcoupler disposed at an angle with respect to the curved lightguide to receive at least two interactions of display light before coupling the display light out of the curved lightguide toward a user's eye to achieve a relatively large pupil diameter (i.e., eyebox). In some embodiments, the curved lightguide is approximately 4 mm thick. The curved lightguides can be implemented in a variety of eyewear display devices, including those with an eyeglass form factor. In general, the terms "incoupler" and "outcoupler" refer to certain types of optical structures, including, but not limited to, transmissive gratings (e.g., a transmissive diffraction grating or a transmissive holographic grating) that causes the incoupler or outcoupler to transmit light and to apply designed optical function(s) to the light during the transmission. In some embodiments, a given incoupler or outcoupler is a reflective grating (e.g., a reflective diffraction grating or a reflective holographic grating) that causes the incoupler or outcoupler to reflect light and to apply designed optical function(s) to the light during the reflection. In some embodiments, the outcoupler is a freeform mirror.

The outcoupler (also sometimes referred to as an optical combiner) combines two light sources, such as environmental light from outside of the combiner and light transmitted from a microdisplay that is directed to the combiner via a waveguide (also referred to as a lightguide). Optical combiners in eyewear display devices, sometimes referred to as near-eye displays, allow a user to view computer-generated content such as text, images, or video content, superimposed over a user's environment viewed through the eyewear display, creating an augmented reality (AR) or mixed reality (MR) experience.

The thicker incoupler couples more display light into the curved lightguide than would be possible with an incoupler that is the same thickness as the curved lightguide. The additional incoupled display light and the outcoupler tilted to receive two bounces of display light result in a larger eyebox, but also allow additional artifact light to be transmitted through the curved lightguide. For example, extraneous side images are produced by light emitted at high angles from the microdisplay in an eyewear display. High-angle light rays that are coupled into the lightguide of the eyewear display create side images in addition to the main image. Depending on the number of bounces, given N bounces for the main image, N+1 and N-1 bounces create artifact images (also referred to as side images). The side images interfere with a user's view of the world and detract from the experience of using the eyewear display.

The thicker incoupler allows more display light that includes both main image light and side image light into the curved lightguide and enlarges the footprints of both main image light and side image light. While the respective footprints of the main image light and side image light overlap in some areas, in other areas the footprints do not overlap. To dim the side images, a surface of the curved lightguide is coated with a low-index coating in areas that experience interactions (i.e., bounces) of main image light, and is not coated with the low-index coating in areas that experience interactions of side image light. Thus, the main image light reflects off the low-index coating and remains within the curved lightguide, but the side image light is transmitted through the gap in the low-index coating out of the curved lightguide.

The lens of the display system is coated with a polarizing or light-absorbing coating (i.e., a sunglass coating), which absorbs the side image light that escapes the curved lightguide through the gap in the low-index coating.

Some embodiments described herein relate to techniques for dimming side images in a curved lightguide by utilizing a polarized light source combined with a half-wave plate (HWP). Light rays traveling through the lightguide to generate a main image undergo an even number of interactions (bounces) within the lightguide, whereas light rays traveling through the lightguide to generate side images undergo an odd number of bounces within the lightguide. The HWP flips the input polarization for the main image to the orthogonal polarization and preserves the linear polarization for the side images due to the even number of bounces of main image light and the odd number of bounces of side image light. In some embodiments, the HWP is a curved HWP placed on the eye-side or the world-side of the lightguide. Once the polarization of the main image has been flipped, the display light is directed to a dielectric mirror, which acts as a weak analyzer to dim the side images by an order of magnitude. The main image polarization is aligned to s- for higher luminance and p-for the side images to dim them.

FIG. 1 illustrates an example eyewear display system 100 including an incoupler and outcoupler configured to produce an enlarged eyebox in accordance with some embodiments. The eyewear display system 100 has a support structure 102 that includes an arm 104, which houses a projector (e.g., a laser projector, a micro-LED projector, a Liquid Crystal on Silicon (LCOS) projector, or the like). The projector is configured to project images toward the eye of a user via a curved lightguide, such that the user perceives the projected images as being displayed in a field of view (FOV) area 106 of a display at one or both of lens elements 108, 110. In the depicted embodiment, the eyewear display system 100 is a near-eye display system in the form of a WHUD in which the support structure 102 is configured to be worn on the head of a user and has a general shape and appearance (that is, form factor) of an eyeglasses (e.g., sunglasses) frame.

The support structure 102 contains or otherwise includes various components to facilitate the projection of such images toward the eye of the user, such as a projector and a curved lightguide. In some embodiments, the support structure 102 further includes various sensors, such as one or more front-facing cameras, rear-facing cameras, other light sensors, motion sensors, accelerometers, and the like. In some embodiments, the support structure 102 includes one or more radio frequency (RF) interfaces or other wireless interfaces, such as a Bluetooth(TM) interface, a WiFi interface, and the like. Further, in some embodiments, the support structure 102 further includes one or more batteries or other portable power sources for supplying power to the electrical components of the eyewear display system 100. In some embodiments, some or all of these components of the eyewear display system 100 are fully or partially contained within an inner volume of support structure 102, such as within the arm 104 in region 112 of the support structure 102. It should be noted that while an example form factor is depicted, it will be appreciated that in other embodiments the eyewear display system 100 may have a different shape and appearance from the eyeglasses frame depicted in FIG. 1. It should be understood that instances of the term "or" herein refer to the non-exclusive definition of "or", unless noted otherwise. For example, herein the phrase "X or Y" means "either X, or Y, or both".

One or both of the lens elements 108, 110 are used by the eyewear display system 100 to provide an augmented reality (AR) display in which rendered graphical content can be superimposed over or otherwise provided in conjunction with a real-world view as perceived by the user through the lens elements 108, 110. For example, a projection system of the eyewear display system 100 uses light to form a perceptible image or series of images by projecting the display light onto the eye of the user via a projector of the projection system, a curved lightguide formed at least partially in the corresponding lens element 108 or 110, and one or more optical elements (e.g., one or more scan mirrors, one or more optical relays, or one or more collimation lenses that are disposed between the projector and the curved lightguide or integrated with the curved lightguide), according to various embodiments.

One or both of the lens elements 108, 110 includes at least a portion of a curved lightguide that routes display light received by an incoupler of the curved lightguide to an outcoupler of the curved lightguide, which outputs the display light toward an eye of a user of the eyewear display system 100. The display light is modulated and projected onto the eye of the user such that the user perceives the display light as an image. In addition, each of the lens elements 108, 110 is sufficiently transparent to allow a user to see through the lens elements to provide a field of view of the user's real-world environment such that the image appears superimposed over at least a portion of the real-world environment.

In some embodiments, the projector of the projection system of the display 100 is a digital light processing-based projector, a scanning laser projector, or any combination of a modulative light source, such as a laser or one or more light-emitting diodes (LEDs), and a dynamic reflector mechanism such as one or more dynamic scanners, reflective panels, or digital light processors (DLPs). In some embodiments, the projector includes a microdisplay panel, such as a micro-LED display panel (e.g., a micro-AMOLED display panel, or a micro inorganic LED (i-LED) display panel) or a micro-Liquid Crystal Display (LCD) display panel (e.g., a Low Temperature PolySilicon (LTPS) LCD display panel, a High Temperature PolySilicon (HTPS) LCD display panel, or an In-Plane Switching (IPS) LCD display panel). In some embodiments, the projector includes a Liquid Crystal on Silicon (LCOS) display panel. In some embodiments, a display panel of the projector is configured to output light (representing an image or portion of an image for display) into the lightguide of the projector. The curved lightguide expands the display light and outputs the display light toward the eye of the user via an outcoupler.

The projector is communicatively coupled to the controller and a non-transitory processor-readable storage medium or memory storing processor-executable instructions and other data that, when executed by the controller, cause the controller to control the operation of the projector. In some embodiments, the controller controls the projector to selectively set the location and size of the FOV area 106. In some embodiments, the controller is communicatively coupled to one or more processors (not shown) that generate content to be displayed at the eyewear display system 100. The projector outputs display light toward the FOV area 106 of the eyewear display system 100 via the curved lightguide. In some embodiments, at least a portion of an outcoupler of the curved lightguide overlaps the FOV area 106. Herein, the range of different user eye positions that will be able to see the display is referred to as the eyebox of the display.

To enlarge the eyebox of the eyewear display system 100, the incoupler is thicker than the curved lightguide and the outcoupler is tilted with respect to the curved lightguide to receive more than one interaction (bounce) of display light before the display light is directed out of the curved lightguide. To dim side images introduced by the thicker incoupler and multiple outcoupler light bounces, the eyewear display system 100 employs one or more artifact mitigation techniques.

According to a first artifact mitigation technique, the eyewear display system 100 includes a sunglass coating on the lens and a low-index coating on portions of the curved lightguide that receive interactions (bounces) of main image light and a gap in the low-index coating on one or more portions of the curved lightguide that receive interactions of side image light. Whereas the main image light is reflected off the low-index coating to remain within the curved lightguide, the side image light escapes through the gap in the low-index coating to the sunglass coating on the lens, which absorbs the side image light.

According to a second artifact mitigation technique, the eyewear display system 100 includes a polarized light source, a half-wave plate (HWP) disposed along one side of the curved lightguide (either the world-side or the eye-side), and a dielectric mirror. Because the main image takes an odd number of bounces on the world-side of the curved lightguide and the side images take an even number of bounces on the world-side of the curved lightguide, the HWP flips the input polarization for the main image to the orthogonal polarization and preserves the linear polarization for the side images. The polarization splitting of the dielectric mirror then acts as a weak analyzer to dim the side images by an order of magnitude.

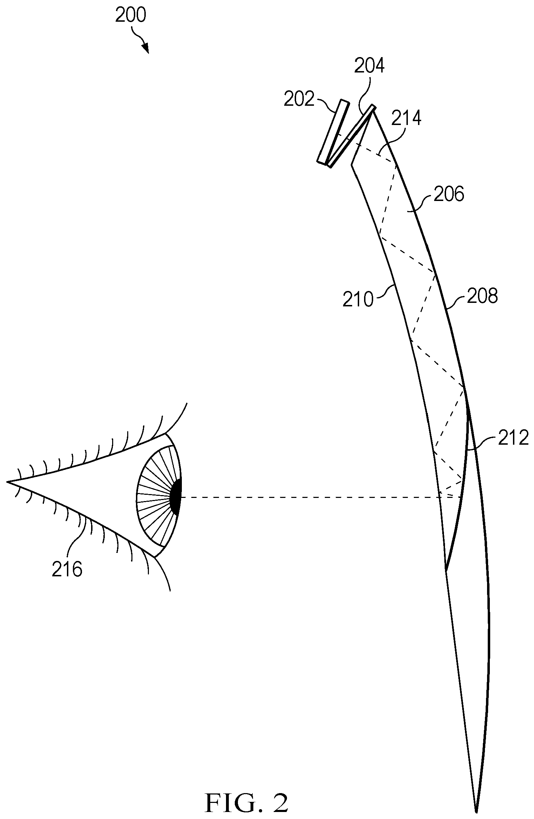

FIG. 2 illustrates an embodiment of a display system 200 including a thin curved lightguide 206 having a world-side surface 208 and an eye-side surface 210. The curved lightguide 206 is configured to receive display light 214 at a proximal end from a microdisplay 202 and transmit the display light 214 through the curved lightguide 206 via total internal reflection to a distal end to an outcoupler 212, which couples the display light 214 out of the curved lightguide 206 to a user's eye 216. The display system 200 includes an incoupler 204 that is thicker than the curved lightguide 206 configured to direct display light 214 from the microdisplay 202 into the curved lightguide 206 and an outcoupler 212 that is tilted with respect to the curved lightguide 206 at an angle such that the outcoupler 212 receives two bounces of display light 214.

The microdisplay 202 of the display system 200 emits an image into a full width, centered approximately normal to the display surface. Evaluated at the pupil, the Lagrange invariant is 25 units.

$$L = \begin{vmatrix} u & \bar{u} \\ h & \bar{h} \end{vmatrix} = u\bar{h} - \bar{u}h$$

Therefore, for a 2.5 mm half-height display source, a 10-degree half emission cone would satisfy this Lagrange invariant requirement. This is a mild emission cone and most sources with sufficient luminance are Lambertian, easily satisfying the cone angle requirement. The thick incoupler 204 receives a larger portion of display light emitted from the microdisplay 202 than an incoupler that is limited to the thickness of the curved lightguide 206, and therefore couples more display light into the curved lightguide 206. Likewise, by tilting the outcoupler 212 to receive more than one bounce of display light 214, the outcoupler 212 couples display light out of the curved lightguide 206 into a larger eyebox than an outcoupler that receives only one bounce of display light 214. Although an additional bounce at the outcoupler 212 results in an additional loss of display light 214, the advent of microdisplays 202 that emit more display light 214 mitigates the additional loss of display light 214 at the outcoupler 212.

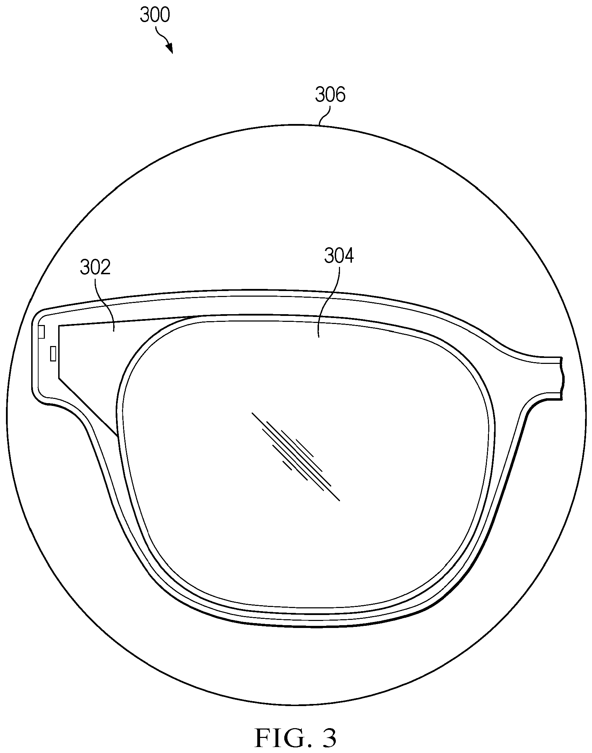

FIG. 3 illustrates an eyeglasses frame 300 configured to house the curved lightguide 206. In some embodiments, the eyeglasses frame 300 carries a lens 304 that includes at least a portion of the curved lightguide 206. In the illustrated example, at least a portion of the incoupler 204 and a portion of the curved lightguide 206 are inside a tab portion 302 of the eyeglasses frame 300. The tab portion 302 of the eyeglasses frame 300 obscures the thickness of the incoupler 204, such that the aesthetics of the display system 100 are not negatively impacted by the thick incoupler 204. In addition, the tab portion 302 provides a guideline for where blackening can occur to mitigate artifacts in some embodiments. An overlaid standard 70 mm ophthalmic puck dimension 306 is also illustrated. In some embodiments, the "tab" 302 is implemented with an edger. Artifact mitigation approaches include coatings, apertures, blackening, adjusting the emission cone of the microdisplay, adjusting the tilt of the microdisplay, adjusting the incoupler geometry, and adjusting the outcoupler geometry.

In some embodiments, the incoupler 204 includes a spherical eye-side surface portion that is carried within the lens 304 and a non-spherical eye-side surface portion that is carried within the tab portion 302 of the eyeglasses frame 300. In some embodiments, the lens 304 is coated with a sunglasses coating that acts as either a polarizer or as an absorber to dim artifact light.

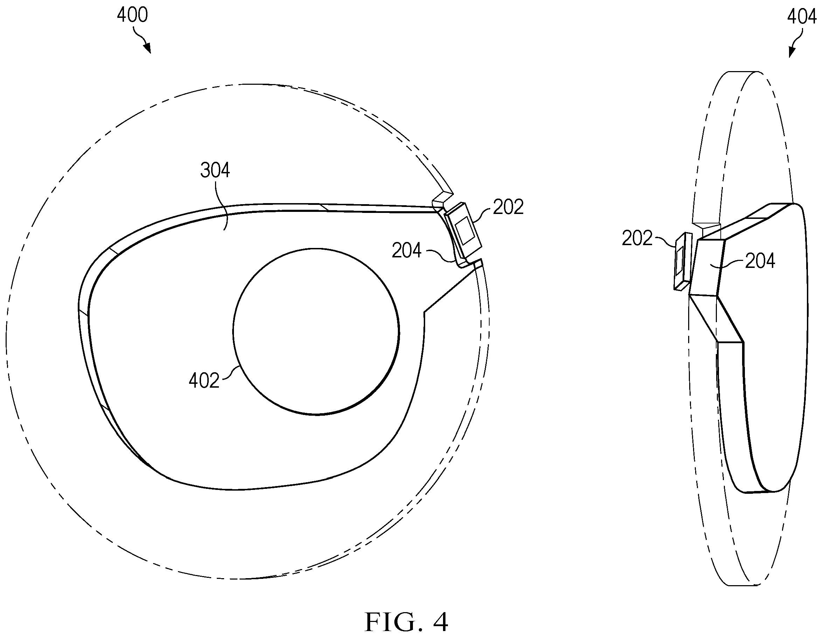

FIG. 4 illustrates a pupil diameter 402 of an eyewear display. In a view 400, the curved lightguide (not shown) is disposed within the lens 304. The microdisplay 202 is housed within the eyeglasses frame (not shown), and the thick incoupler 204 couples display light from the microdisplay 202 into the curved lightguide to produce a display within a pupil diameter 402. Increasing the pupil diameter 402 increases the eyebox of the eyewear display, such that the eyewear display can be used by a larger population of potential users with a wider range of facial sizes and geometries. A view 404 illustrates a thickness of the incoupler 204 that is thicker than the lens 304, and therefore necessarily thicker than the curved lightguide disposed within the lens 304.

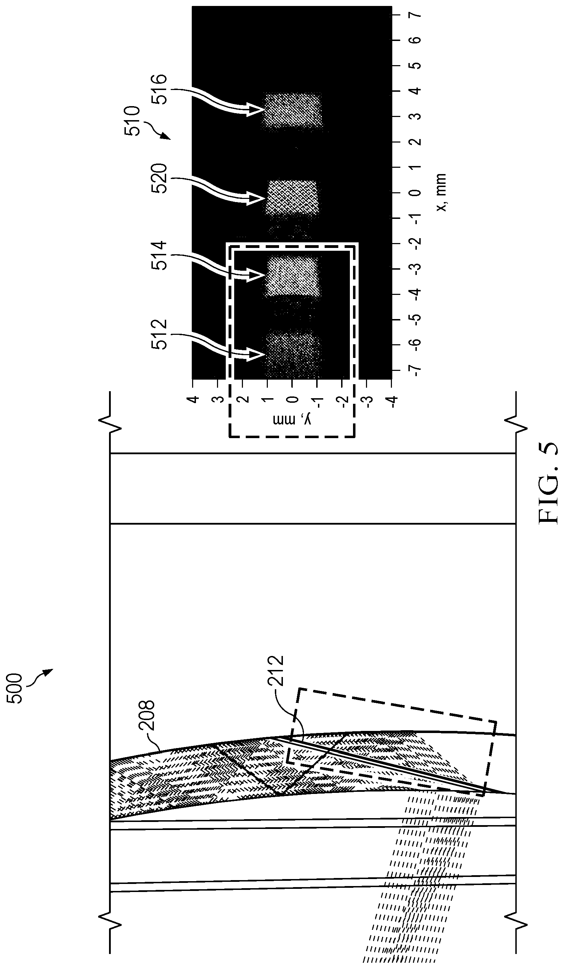

FIG. 5 illustrates how transmission of display light through the outcoupler 212 causes artifacts caused by three side images from the curved lightguide 206 in the absence of mitigation techniques. In a view 500, display light 214 is transmitted through the curved lightguide 206 to the outcoupler 212, which is tilted at an angle to receive two bounces of the display light 214 before directing the display light 214 out of the eye-side surface 210 of the curved lightguide 206. In a view 510, the main image 520 is the third image from the left and appears as a grid pattern. The two side images 512, 514 to the left of the main image are artifacts caused by transmission of display light through the outcoupler 212. The side image 516 to the right of the main image 520 is an artifact caused by a bounce on the eye-facing side of the combiner.

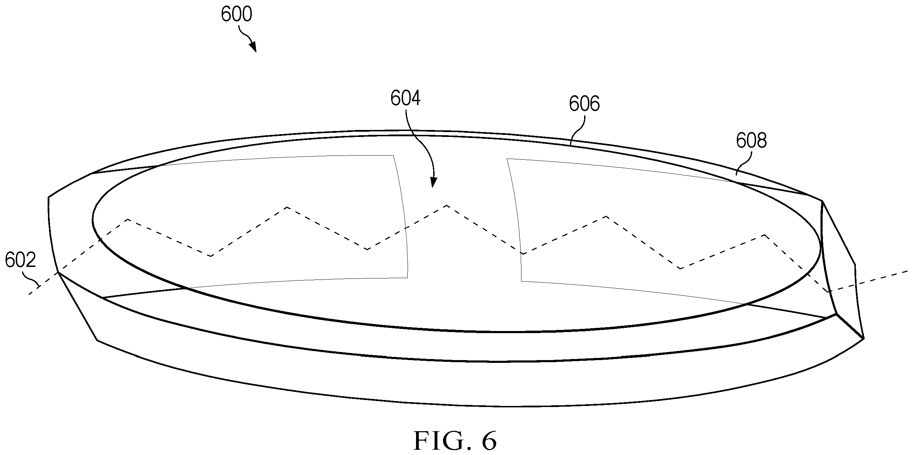

FIG. 6 is a diagram 600 illustrating placement of a low-index coating 606 on the world-side surface 208 of the curved lightguide 206 to reflect main image light and a gap 604 in the low-index coating 606 to allow side image light to escape the curved lightguide 206. The side image light that escapes through the gap 604 in the low-index coating 606 is absorbed by a sunglass coating 608 on a lens 304 of a display system 100 in accordance with some embodiments.

Polarized display light 602 is input to the curved lightguide 206 via the thick incoupler (not shown). The polarized display light 602 includes light of a main image 520 and light of side images, such as side images 512, 514, 516. The main image light and the side image light have distinct footprints with non-overlapping areas. The low-index coating 606 causes incident light to be reflected within the curved lightguide 206 to be directed toward the user's eye 216. By placing the gap 604 in the low-index coating 606 at a location where only side image light (but not main image light) is incident on the world-side 208 of the curved lightguide 206, the display system 100 allows the side image light incident on the world-side surface 208 of the curved lightguide 206 at the gap 604 to be transmitted out of the curved lightguide 206 through the gap 604. The sunglass coating 608 absorbs the side image light that escapes through the gap 604.

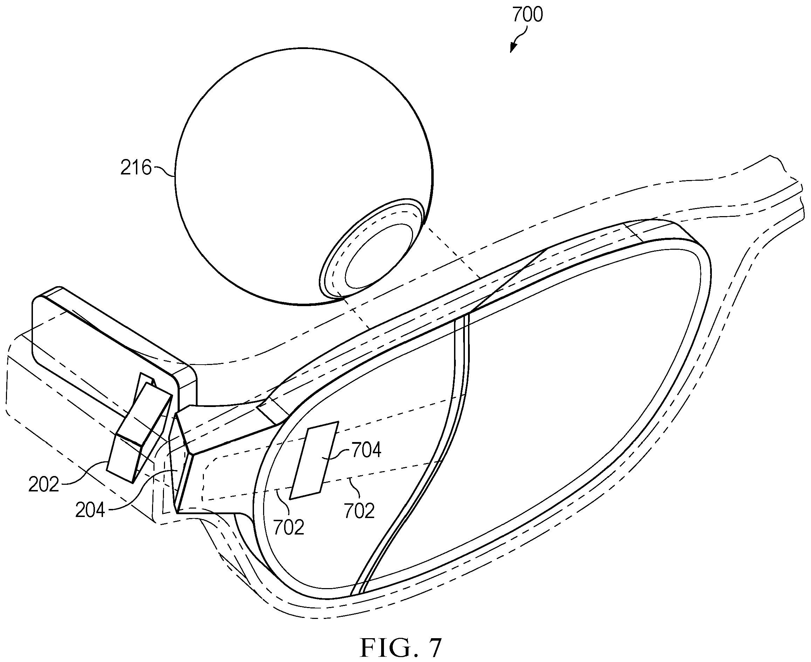

FIG. 7 illustrates a view 700 of placement of the gap 604 through which side image light escapes the lightguide to be dimmed by the light-absorbing or polarizing coating on the lens 304. In the illustrated example, the microdisplay 202 emits display light toward the thick incoupler 204. The thick incoupler 204 couples the display light 214 into the curved lightguide (not shown). Regions 702 illustrate the bounce locations of main image light, while the region 704 illustrates an area at which the side image light experiences bounces at the world-side 208 of the curved lightguide 206, but the main image light does not experience any bounces. The regions 702 are coated with a low-index coating, whereas the region 704 is not coated with the low-index coating; thus, the gap 604 is within the region 704.

The side image light escapes the curved lightguide through the gap 604, where it is absorbed by the sunglass coating on the lens 304 (not shown). The main image light experiences total internal reflection against the low-index coating and remains within the curved lightguide 206 until the main image light is directed out of the curved lightguide via the outcoupler 212 (not shown) toward the user's eye 216.

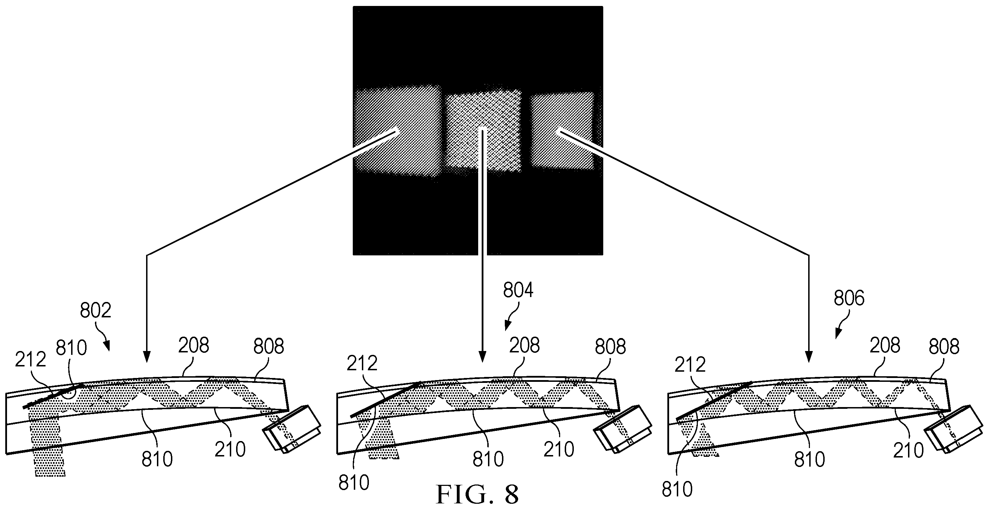

An additional artifact mitigation technique uses the differing number of world-side bounces experienced by the main image and side image light to further dim side images. FIG. 8 illustrates a number of bounces on the world-facing side of the curved lightguide experienced by a left side image 802, a main image 804, and a right side image 806. Both the left side image 802 and the right side image 806 take an even number of bounces on the world-side 208 of the curved lightguide 206, with the left side image 802 taking two bounces and the right side image 806 taking four bounces in the illustrated example. The main image 804, by contrast, takes an odd number of bounces on the world-side 208 of the curved lightguide 206 (three, in the illustrated example).

To facilitate dimming the side images 802, 806 while preserving the main image 804, the curved lightguide 206 includes a half-wave plate (HWP) 808 in conjunction with a dielectric mirror 810. The HWP 808 flips the input polarization for the main image 804 to the orthogonal polarization while preserving the linear polarization for the side images 802, 806. In some embodiments, the HWP 808 follows the curve of the world-side 208 of the curved lightguide 206. In some embodiments, the HWP 808 is a film on the world-side 208 of the curved lightguide 206.

The polarization-splitting of the dielectric mirror 810 acts as a weak analyzer to dim the side images 802, 806 by an order of magnitude. In some embodiments, the dielectric mirror 810 provides approximately 1:4 contrast. In some embodiments, the main image polarization is aligned to be s- for higher luminance and p- for the side images to dim them. The dielectric mirror 810 is positioned on at least one of the outcoupler 212 and the eye-side 210 of the curved lightguide 206.

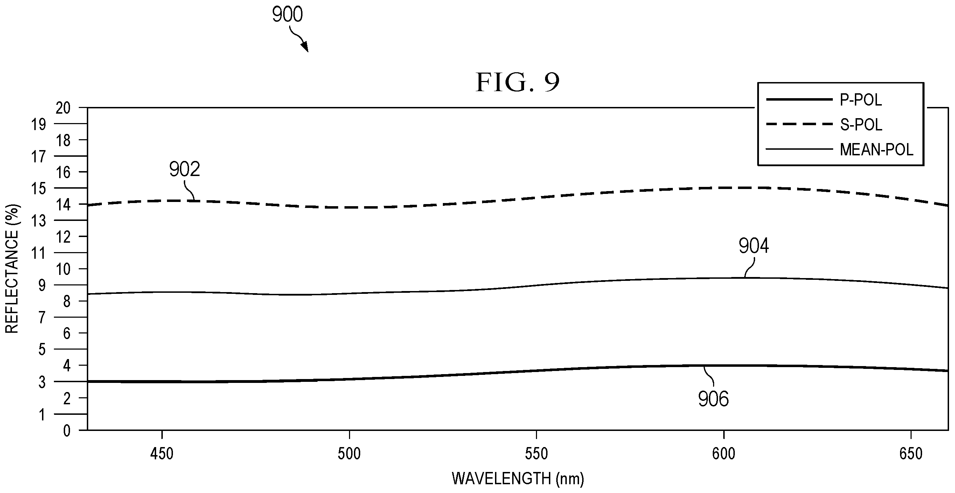

FIG. 9 is a graph 900 illustrating the polarization splitting of the dielectric mirror 810. In the illustrated example, the dielectric mirror 810 is a 7-layer polarization splitting dielectric mirror coating with alternating layers of nb2o5 and si02 with approximately 1:4 coating. The x-axis shows wavelength in nanometers and the y-axis shows % reflectance. The solid curve 906 shows p-reflectivity and the dashed curve 902 shows s- reflectivity.

Thus, the dielectric mirror 810 reflects more p-polarized light than s- polarized light. If the display light 602 has p- polarization, the HWP 808 will flip the main image light to s-polarization due to the odd number of bounces of main image light against the world-side surface 208 of the curved lightguide 206 and will preserve the p- polarization of the side image light due to the even number of bounces of side image light against the world-side surface 208 of the curved lightguide 206. The dielectric mirror 810 on the eye-side 210 of the curved lightguide 206 and on the outcoupler 212 reflects more of the main image light than the side image light, thereby further dimming the side images 802, 806.

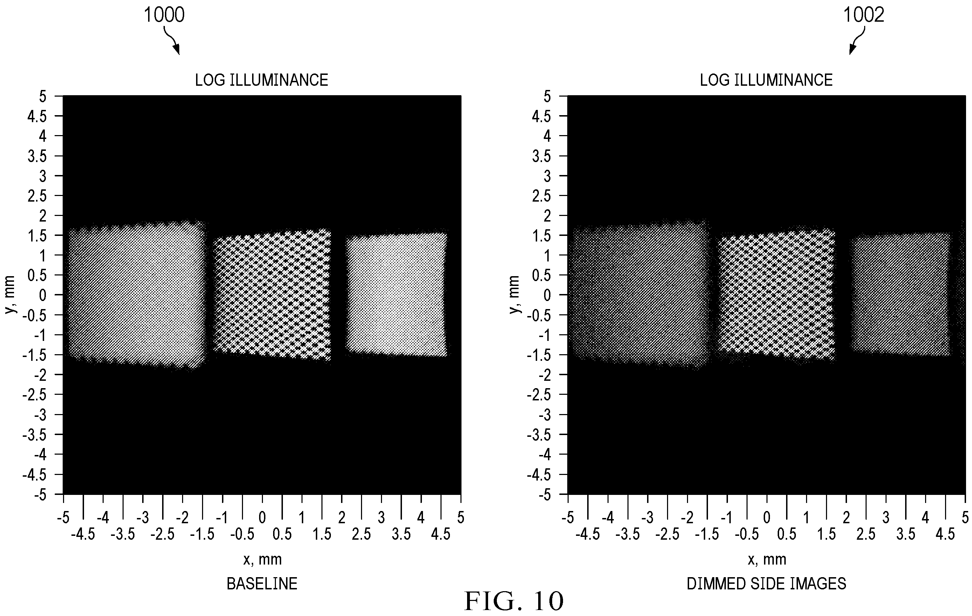

FIG. 10 illustrates the log illuminance 1000 for a baseline left side image, main image, and right side image and the log illuminance 1002 for dimmed side images resulting from the HWP 808 and dielectric mirror 810 of some embodiments. As illustrated in FIG. 10, for approximately 100 mil rays, the side images are dimmed by an order of magnitude compared to the baseline.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the subject matter as defined by the independent claims. Accordingly, the protection sought herein is as set forth in the independent claims below.

## Claims

1.  A device comprising:

    a microdisplay (202);
    a curved lightguide (206) configured to receive light (214, 602) from the microdisplay and to transmit the light from a proximal end of the curved lightguide to a distal end of the curved lightguide;
    an incoupler (204) configured to direct light from the microdisplay into the curved lightguide, wherein the incoupler is thicker than the curved lightguide; and
    an outcoupler (212) disposed at the distal end of the curved lightguide, the outcoupler configured to direct a portion of the light out of the curved lightguide toward a user's eye (216), wherein the outcoupler is disposed at an angle with respect to the curved lightguide to receive two interactions of the light at a side of the outcoupler facing the user's eye.

2.  The device of claim 1, further comprising:
    a frame (300) to carry a lens (304), wherein at least a portion of the curved lightguide and a first portion of the incoupler are disposed within the lens and a second portion of the incoupler is disposed within the frame.

3.  The device of claim 2, wherein the first portion of the incoupler has a spherical eye-side surface and the second portion of the incoupler has a non-spherical eye-side surface.

4.  The device of any of claims 1 to 3, wherein the curved lightguide comprises:

    a first portion of a world-side surface coated with a low-index coating (606); and
    a second portion of the world-side surface without the low-index coating, wherein side image light is incident on the second portion.

5.  The device of any of claims 2 to 4, wherein the lens is coated with at least one of a polarizing coating and a light absorbing coating (608).

6.  The device of any of claims 1 to 5, further comprising:

    a half-wave plate to receive light transmitted through the curved lightguide; and
    a dielectric mirror disposed on at least one of the outcoupler and an eye-side surface of the curved lightguide.

7.  The device of claim 6, wherein:

    the half-wave plate is to flip an input polarization for a main image generated by the light to an orthogonal polarization while preserving a linear polarization for side images generated by the light; and
    the dielectric mirror is to dim the side images.

8.  A method comprising:

    directing light (512, 514) received at an incoupler (204) from a microdisplay (202) into a curved lightguide (206) disposed within a lens (304), wherein the incoupler is thicker than the curved lightguide;
    receiving the light at the curved lightguide and transmitting the light from a proximal end of the curved lightguide to a distal end of the curved lightguide; and
    directing a portion of the light at an outcoupler (212) disposed at the distal end of the curved lightguide out of the curved lightguide toward a user's eye (216), wherein the outcoupler is disposed at an angle with respect to the curved lightguide to receive two interactions of the light at a side of the outcoupler facing the user's eye.

9.  The method of claim 8, wherein:
    a first portion of the incoupler has a spherical eye-side surface and a second portion of the incoupler has a non-spherical eye-side surface.

10. The method of any of claims 8 to 9, wherein the curved lightguide comprises:

    a first portion of world-side surface coated with a low-index coating (606); and
    a second portion of the world-side surface without the low-index coating, wherein side image light is incident on the second portion.

11. The method of claim 10, wherein the lens is coated with at least one of a polarizing coating and a light absorbing coating (608).

12. The method of any of claims 8 to 11, further comprising:
    directing light received at the incoupler at a proximal end of the curved lightguide through a half-wave plate (808) to a dielectric mirror (810).

13. The method of claim 12, wherein the dielectric mirror is disposed on at least one of the outcoupler and an eye-side of the curved lightguide.

14. The method of any of claims 12 to 13, further comprising:

    flipping, at the half-wave plate, an input polarization for a main image (520) generated by the light to an orthogonal polarization while preserving a linear polarization for side images (512, 514) generated by the light; and
dimming the side images at the dielectric mirror.

**Patentansprüche**

1. Vorrichtung, umfassend:

   ein Mikrodisplay (202);
   einen gebogenen Lichtleiter (206), der dazu konfiguriert ist, Licht (214, 602) von dem Mikrodisplay zu empfangen und das Licht von einem proximalen Ende des gebogenen Lichtleiters zu einem distalen Ende des gebogenen Lichtleiters zu übertragen;
   einen Einkoppler (204), der dazu konfiguriert ist, Licht von dem Mikrodisplay in den gebogenen Lichtleiter zu richten, wobei der Einkoppler dicker als der gebogene Lichtleiter ist; und
   einen Auskoppler (212), der an dem distalen Ende des gebogenen Lichtleiters angeordnet ist, wobei der Auskoppler dazu konfiguriert ist, einen Abschnitt des Lichts aus dem gebogenen Lichtleiter in Richtung des Auges eines Benutzers (216) zu richten, wobei der Auskoppler in einem Winkel in Bezug auf den gebogenen Lichtleiter angeordnet ist, um zwei Interaktionen des Lichts an einer Seite des Auskopplers zu empfangen, die dem Auge des Benutzers zugewandt ist.

2. Vorrichtung nach Anspruch 1, ferner umfassend:
   einen Rahmen (300) zum Tragen einer Linse (304), wobei mindestens ein Abschnitt des gebogenen Lichtleiters und ein erster Abschnitt des Einkopplers innerhalb der Linse angeordnet sind und ein zweiter Abschnitt des Einkopplers innerhalb des Rahmens angeordnet ist.

3. Vorrichtung nach Anspruch 2, wobei der erste Abschnitt des Einkopplers eine sphärische augenseitige Oberfläche aufweist und der zweite Abschnitt des Einkopplers eine nichtsphärische augenseitige Oberfläche aufweist.

4. Vorrichtung nach einem der Ansprüche 1 bis 3, wobei der gebogene Lichtleiter Folgendes umfasst:

   einen ersten Abschnitt einer Weltseitenoberfläche, der mit einer Low-Index-Beschichtung (606) beschichtet ist; und
   einen zweiten Abschnitt der Weltseitenoberfläche ohne die Low-Index-Beschichtung, wobei Seitenbildlicht auf den zweiten Abschnitt einfällt.

5. Vorrichtung nach einem der Ansprüche 2 bis 4, wobei die Linse mit mindestens einer polarisierenden Beschichtung und einer lichtabsorbierenden Beschichtung (608) beschichtet ist.

6. Vorrichtung nach einem der Ansprüche 1 bis 5, ferner umfassend:

   eine Halbwellenplatte zum Empfangen von Licht, das durch den gebogenen Lichtleiter übertragen wird; und
   ein dielektrischer Speiegl, der auf mindestens einem von dem Auskoppler und einer augenseitigen Oberfläche des gebogenen Lichtleiters angeordnet ist.

7. Vorrichtung nach Anspruch 6, wobei:

   die Halbwellenplatte dazu dient, eine Eingabepolarisation für ein durch das Licht erzeugtes Hauptbild in eine orthogonale Polarisation umzudrehen, während eine lineare Polarisation für durch das Licht erzeugte Seitenbilder erhalten bleibt; und
   der dielektriksche Spiegel darin besteht, die Seitenbilder abzudunkeln.

8. Verfahren, umfassend:

   Richten von an einem Einkoppler (204) von einem Mikrodisplay (202) empfangenem Licht (512, 514) in einen gebogenen Lichtleiter (206), der innerhalb einer Linse (304) angeordnet ist, wobei der Einkoppler dicker als der gebogene Lichtleiter ist;
   Empfangen des Lichts an dem gebogenen Lichtleiter und Übertragen des Lichts von einem proximalen Ende des gebogenen Lichtleiters zu einem distalen Ende des gebogenen Lichtleiters; und
   Richten eines Abschnitts des Lichts an einen Auskoppler (212), der an dem distalen Ende des gebogenen Lichtleiters angeordnet ist, aus dem gebogenen Lichtleiter in Richtung des Auges eines Benutzers (216), wobei der Auskoppler in einem Winkel in Bezug auf den gebogenen Lichtleiter angeordnet ist, um zwei Interaktionen des Lichts an einer Seite des Auskoppelers zu empfangen, die dem Auge des Benutzers zugewandt ist.

9. Verfahren nach Anspruch 8, wobei:
   ein erster Abschnitt des Einkopplers eine sphärische augenseitige Oberfläche aufweist und ein zweiter Abschnitt des Einkopplers eine nichtsphärische augenseitige Oberfläche aufweist.

10. Verfahren nach einem der Ansprüche 8 bis 9, wobei der gebogene Lichtleiter Folgendes umfasst:

einen ersten Abschnitt von Weltseitenoberfläche, der mit einer Low-Index-Beschichtung (606) beschichtet ist; und
einen zweiten Abschnitt der Weltseitenoberfläche ohne die Low-Index-Beschichtung, wobei Seitenbildlicht auf den zweiten Abschnitt einfällt.

11. Verfahren nach Anspruch 10, wobei die Linse mit mindestens einer polarisierenden Beschichtung und einer lichtabsorbierenden Beschichtung (608) beschichtet ist.

12. Verfahren nach einem der Ansprüche 8 bis 11, ferner umfassend:
Richten von an dem Einkoppler an einem proximalen Ende des gebogenen Lichtleiters empfangenem Licht durch eine Halbwellenplatte (808) zu einem dielektrischen Spiegel (810).

13. Verfahren nach Anspruch 12, wobei der dielektrische Spiegel auf mindestens einem von dem Auskopppler und einer augenseitigen Oberfläche des gebogenen Lichtleiters angeordnet ist.

14. Verfahren nach einem der Ansprüche 12 bis 13, ferner umfassend:

Umdrehen einer Eingabepolarisation für ein durch das Licht erzeugtes Hauptbild (520) in eine orthogonale Polarisation an der Halbwellenplatte, während eine lineare Polarisation für durch das Licht erzeugte Seitenbilder (512, 514) erhalten bleibt; und
Abdunkeln der Seitenbilder an dem dielektrischen Spiegel.

## Revendications

1. Dispositif comprenant :

un micro-écran (202) ;
un guide de lumière incurvé (206) configuré pour recevoir de la lumière (214, 602) provenant du micro-écran et pour transmettre la lumière d'une extrémité proximale du guide de lumière incurvé à une extrémité distale du guide de lumière incurvé ;
un coupleur d'entrée (204) configuré pour diriger de la lumière provenant du micro-écran dans le guide de lumière incurvé, dans lequel le coupleur d'entrée est plus épais que le guide de lumière incurvé ; et
un coupleur de sortie (212) disposé à l'extrémité distale du guide de lumière incurvé, le coupleur de sortie étant configuré pour diriger une partie de la lumière hors du guide de lumière incurvé vers l'œil d'un utilisateur (216), dans lequel le coupleur de sortie est disposé à un angle par rapport au guide de lumière incurvé pour recevoir deux interactions de la lumière sur un côté du coupleur de sortie faisant face à l'œil de l'utilisateur.

2. Dispositif selon la revendication 1, comprenant également : un cadre (300) pour porter une lentille (304), dans lequel au moins une partie du guide de lumière incurvé et une première partie du coupleur d'entrée sont disposées à l'intérieur de la lentille et une seconde partie du coupleur d'entrée est disposée à l'intérieur du cadre.

3. Dispositif selon la revendication 2, dans lequel la première partie du coupleur d'entrée a une surface côté œil sphérique et la seconde partie du coupleur d'entrée a une surface côté œil non sphérique.

4. Dispositif selon l'une quelconque des revendications 1 à 3, dans lequel le guide de lumière incurvé comprend :

une première partie d'une surface côté monde revêtue d'un revêtement à faible indice (606) ; et
une seconde partie de la surface côté monde sans le revêtement à faible indice, dans lequel la lumière de l'image latérale est incidente sur la seconde partie.

5. Dispositif selon l'une quelconque des revendications 2 à 4, dans lequel la lentille est revêtue d'au moins l'un d'un revêtement polarisant et d'un revêtement absorbant la lumière (608).

6. Dispositif selon l'une quelconque des revendications 1 à 5, comprenant également :

une plaque demi-onde pour recevoir la lumière transmise à travers le guide de lumière incurvé ; et
un miroir diélectrique disposé sur au moins l'un du coupleur de sortie et d'une surface côté œil du guide de lumière incurvé.

7. Dispositif selon la revendication 6, dans lequel :

la plaque demi-onde sert à inverser une polarisation d'entrée pour une image principale générée par la lumière en une polarisation orthogonale tout en préservant une polarisation linéaire pour des images latérales générées par la lumière ; et
le miroir diélectrique sert à atténuer les images latérales.

8. Procédé comprenant :

la direction de la lumière (512, 514) reçue au niveau d'un coupleur d'entrée (204) provenant d'un micro-écran (202) dans un guide de lumière incurvé (206) disposé à l'intérieur d'une lentille (304), dans lequel le coupleur d'entrée est plus épais que le guide de lumière incurvé ;
la réception de la lumière au niveau du guide de lumière incurvé et la transmission de la lumière provenant d'une extrémité proximale du guide de lumière incurvé à une extrémité distale du guide de lumière incurvé ; et
la direction d'une partie de la lumière au niveau d'un coupleur de sortie (212) disposé à l'extrémité distale du guide de lumière incurvé, hors du guide de lumière incurvé vers l'œil d'un utilisateur (216), dans lequel le coupleur de sortie est disposé à un angle par rapport au guide de lumière incurvé pour recevoir deux interactions de la lumière sur un côté du coupleur de sortie faisant face à l'œil de l'utilisateur.

9. Procédé selon la revendication 8, dans lequel :
une première partie du coupleur d'entrée a une surface côté œil sphérique et une seconde partie du coupleur d'entrée a une surface côté œil non sphérique.

10. Procédé selon l'une quelconque des revendications 8 à 9, dans lequel le guide de lumière incurvé comprend :

une première partie d'une surface côté monde revêtue d'un revêtement à faible indice (606) ; et
une seconde partie de la surface côté monde sans le revêtement à faible indice, dans lequel la lumière de l'image latérale est incidente sur la seconde partie.

11. Procédé selon la revendication 10, dans lequel la lentille est revêtue d'au moins un revêtement polarisant et d'un revêtement absorbant la lumière (608).

12. Procédé selon l'une quelconque des revendications 8 à 11, comprenant également :
la direction de la lumière reçue au niveau du coupleur d'entrée à une extrémité proximale du guide de lumière incurvé à travers une plaque demi-onde (808) vers un miroir diélectrique (810).

13. Procédé selon la revendication 12, dans lequel le miroir diélectrique est disposé sur au moins l'un du coupleur de sortie et d'un côté œil du guide de lumière incurvé.

14. Procédé selon l'une quelconque des revendications 12 et 13, comprenant également :

l'inversement, au niveau de la plaque demi-onde, d'une polarisation d'entrée pour une image principale (520) générée par la lumière en une polarisation orthogonale tout en préservant une polarisation linéaire pour des images latérales (512, 514) générées par la lumière ; et
l'atténuation des images latérales au niveau du miroir diélectrique.

FIG. 1

EP 4 430 446 B1

FIG. 2

FIG. 3

FIG. 4

EP 4 430 446 B1

FIG. 5

EP 4 430 446 B1

FIG. 6

FIG. 7

EP 4 430 446 B1

FIG. 8

EP 4 430 446 B1

900

FIG. 9

FIG. 10

**EP 4 430 446 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003086135 A1